# FASCICULE DE BREVET EUROPEEN

(11) **EP 1 826 105 B1**
(45) Date de publication et mention de la délivrance du brevet: **15.04.2009**
(21) Numéro de dépôt: 07102915.1
(22) Date de dépôt: 22.02.2007
(51) Int. Cl.: B62D 43/10, B62D 25/20, B62D 29/04

(54) **Plancher en matière plastique et en élastomère de véhicule automobile**
Bodenplatte aus Plastik und Elastomer für ein Kraftfahrzeug
Floor plate consisting of plastics and elastomer for a motor vehicle

(30) Priorité: 23.02.2006 FR 0601600
(43) Date de publication de la demande: 29.08.2007
(73) Titulaire: COMPAGNIE PLASTIC OMNIUM, 69007 Lyon (FR)
(72) Inventeur: Viot, Frédéric, 01450, PONCIN (FR); Gilotte, Philippe, 01470, BENONCES (FR)
(74) Mandataire: Remy, Vincent Noel Paul

(56) Documents cités:
- EP-A- 1 470 992
- EP-B- 0 012 940
- WO-A-20/05113321
- FR-A- 750 198
- FR-A- 2 732 283
- FR-A- 2 744 978
- PATENT ABSTRACTS OF JAPAN vol. 2005, -& JP 2004 322829 A (MAZDA), 18 novembre 2004 (2004-11-18)

## Description

La présente invention concerne un plancher en matière plastique de véhicule automobile selon le préambule de la revendication 1, tel que divulgué par le document EP 1 470 992 A.

On entend par plancher à la fois la pièce structurelle délimitant le fond de l'habitacle du véhicule automobile et également la pièce structurelle délimitant le fond du coffre de rangement située à l'arrière du véhicule et qui comprend généralement un bac de roue de secours.

La pièce « plancher » est une pièce structurelle qui est solidarisée à la caisse en blanc du véhicule automobile et qui, en général, participe à sa rigidité.

On sait qu'un plancher est une source de bruit du fait des vibrations et des impacts qu'il subit lors du roulage du véhicule.

En raison de sa grande taille et de sa rigidité, le plancher comprend des modes vibratoires basses fréquences de l'ordre d'une centaine de hertz (Hz). Lors du roulage du véhicule, le plancher vibre autour de ces basses fréquences et produit un bruit de roulage gênant.

Il est également important que le plancher soit étanche au bruit de roulage dont la fréquence évolue autour de 1000 Hz. Le bruit de roulage est dû notamment au contact des pneumatiques avec la route ou à la projection de gravillons sous le plancher.

L'invention vise à proposer un plancher de véhicule automobile dont les qualités acoustiques sont meilleures que celles des planchers de l'état de la technique.

A cet effet, l'invention a pour objet un plancher en matière plastique de véhicule automobile, selon la revendication 1.

L'utilisation d'élastomère dans la conception du plancher permet d'atténuer les vibrations du plancher lors du roulage du véhicule automobile et donc de réduire le bruit dans l'habitacle du véhicule.

En jouant sur la position de l'élastomère sur le plancher, il est possible d'atténuer plus ou moins certaines fréquences de résonance du plancher.

Un plancher de véhicule automobile selon l'invention peut en outre comporter l'une ou plusieurs des caractéristiques suivantes.
- Le plancher comprend un bac de roue de secours réalisé au moins partiellement en élastomère, de l'élastomère apparaissant au moins localement en dessous du bac de roue lorsque le plancher est monté sur le véhicule.
- Le plancher comprend un corps en matière plastique muni d'au moins une ouverture et une pièce en élastomère obturant cette ouverture. Des essais ont montré qu'en dotant le plancher de telles pièces en élastomère, on atténue les vibrations du plancher lors du roulage.
- Le corps comprend un réseau de bandes de matière plastique agencées de manière à former une pluralité d'ouvertures du corps, chaque ouverture étant obturée par une pièce d'élastomère.
- Le plancher comprend au moins deux corps en matière plastique distincts et une pièce en élastomère reliant les deux corps. La pièce en élastomère permet de découpler les deux corps qui peuvent vibrer indépendamment l'un de l'autre. Ainsi, le plancher est constitué de corps de petites surfaces ce qui permet réduire considérablement les fréquences basses de résonance du plancher et donc de réduire le bruit.
- Le corps est réalisé en polypropylène chargé de fibres de verre, par exemple du polypropylène comprenant 40% de fibres de verre.
- L'élastomère comprend des granulats de pneumatiques recyclés.
- Le plancher est du type comprenant un bac de roue de secours.

L'invention sera mieux comprise à la lecture de la description qui va suivre, donnée uniquement à titre d'exemple et faite en se référant aux dessins annexés dans lesquels :
- la figure 1 est un schéma en perspective d'un plancher en matière plastique selon un premier mode de réalisation de l'invention ;
- la figure 2 est une vue d'une variante du plancher de la figure 1 ;
- la figure 3 est un schéma en coupe d'un plancher ;
- la figure 4 est un schéma en perspective d'un plancher selon un deuxième mode de réalisation de l'invention ;
- la figure 5 est un schéma en perspective et en coupe d'un plancher ;
- la figure 6 est un schéma en perspective d'un plancher en matière plastique ;
- la figure 7 est un graphique représentant les réponses en fréquence d'un plancher selon l'état de la technique, d'un plancher selon le premier mode réalisation de l'invention et d'un plancher selon la figure 6.

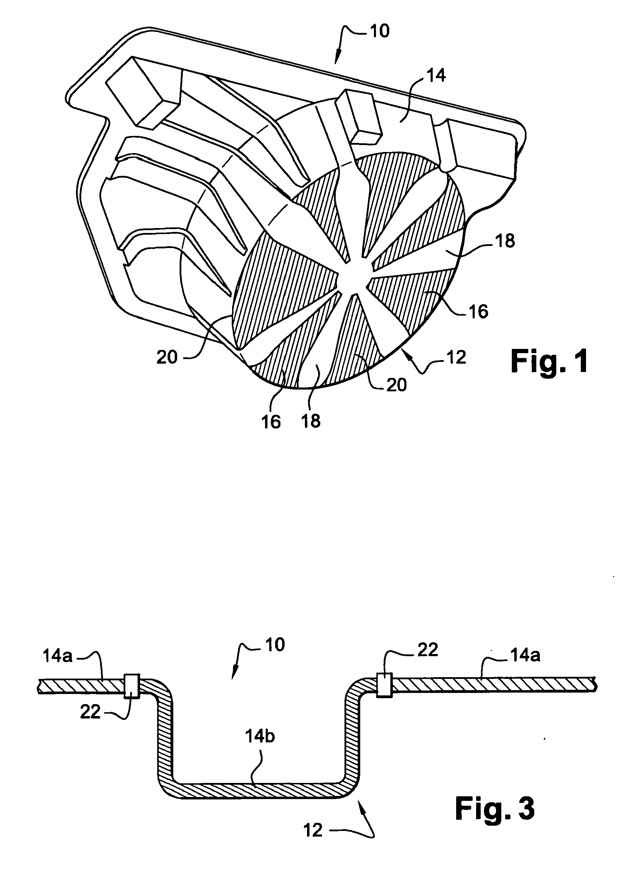

On a représenté, sur les figures 1 à 6, un plancher en matière plastique de véhicule automobile.

Le plancher 10 est un plancher arrière de véhicule automobile comprenant un bac 12 de roue de secours.

Selon un premier mode de réalisation représenté sur la figure 1, le plancher 10 comprend un corps 14 en matière plastique muni d'une pluralité d'ouvertures 16 ménagées dans la partie du corps formant le fond du bac 12 de roue de secours. Le corps 14 est fabriqué de manière classique par injection de matière plastique dans un moule.

Le corps 14 du plancher 10 comprend un réseau étoilé de bandes 18 de matière plastique agencées de manière à former la pluralité d'ouvertures 16 du corps 14.

Chaque ouverture 16 est obturée par une pièce 20 en élastomère.

Une première façon de fabriquer un tel plancher consiste à mouler au préalable le corps 14 dans un premier moule, à disposer le corps 14 préformé dans un second moule et à injecter de l'élastomère sur le corps 14.

Une seconde façon consiste à surmouler des plaques d'élastomère avec de la matière thermoplastique constituant le corps 14.

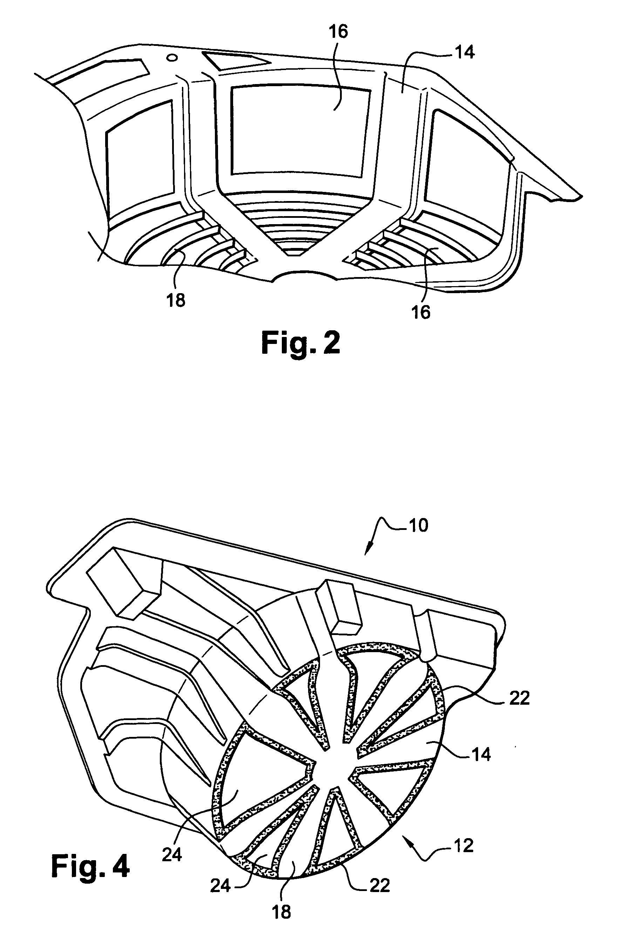

La figure 2 représente un corps 14 préformé, selon une variante du corps de la figure 1.

Dans cette variante, outre le réseau le réseau étoilé de bandes 18 de matière plastique, le corps 14 comprend des bandes 18 en arc de cercle disposées de manière circonférentielles au bac de roue.

Sur la figure 3, un plancher 10 comprend deux corps 14a et 14b distincts.

Le corps 14a définit la forme principale du plancher 10 et le corps 14b définit le bac 12 de roue de secours.

Un joint 22 circulaire en élastomère relie les deux corps 14a et 14b.

Ainsi, grâce au joint d'élastomère 22, les deux corps 14a et 14b sont libres de vibrer indépendamment l'un de l'autre. La surface vibrante du plancher 10 est ainsi réduite ce qui permet de diminuer les nuisances sonores dues aux vibrations du plancher 10.

Selon un deuxième mode de réalisation, représenté sur la figure 4, le fond du bac 12 de roue de secours du plancher 10 comprend une pluralité de corps 14.

Les corps 14 comprennent notamment une pièce en étoile formée par le réseau de bande 18 de matière plastique et une pluralité de plaques 24 de matière plastique intercalées entre les bandes 18 de matière thermoplastique.

Les plaques 24 sont reliées aux bandes 18 de matière plastique par l'intermédiaire de joints en élastomère 22.

Ainsi, chaque plaque 24 est libre de vibrer par rapport aux bandes 18 de matière plastique ce qui permet de réduire les vibrations à basse fréquence du plancher 10.

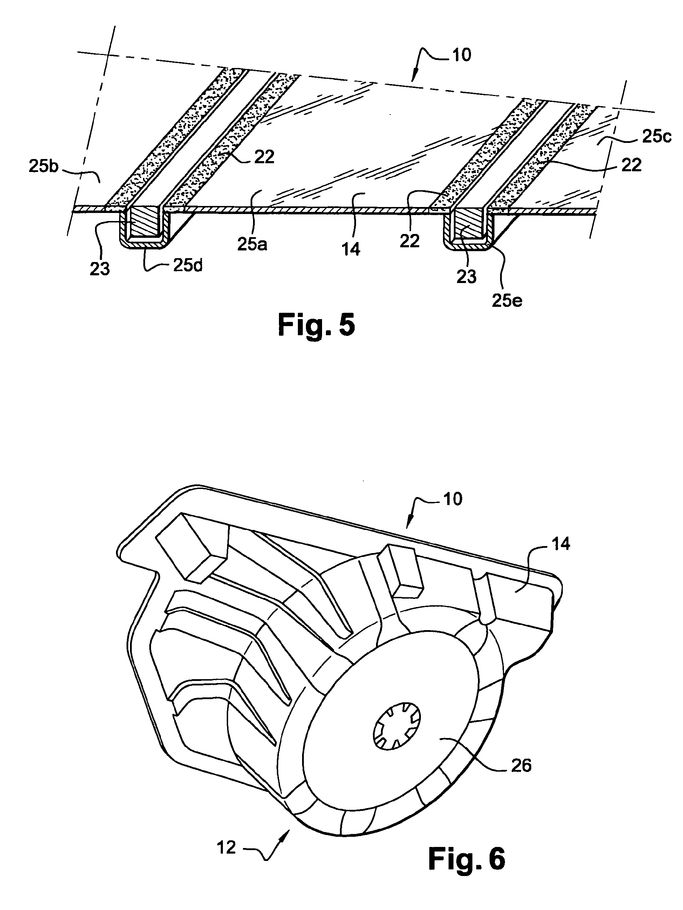

La figure 5 représente un plancher.

Ce plancher 10 ne comprend pas de bac de roue de secours et est relié à des longerons 23.

Le corps 14 du plancher 10 comprend une partie centrale 25a intercalée entre les deux longerons 23, deux parties latérales 25b et 25c et deux parties de liaison 25d et 25e disposées entre la partie centrale et chaque partie latérale et reliées aux longerons 23.

Les différentes parties du corps 14 sont reliées les unes aux autres par l'intermédiaire de joints en élastomère 22.

Ainsi, la partie centrale 25a du plancher 10 n'est pas reliée directement aux longerons 23 ce qui lui permet de vibrer indépendamment des longerons. Les vibrations du plancher 10 ne sont donc pas transmises à la caisse du véhicule automobile par l'intermédiaire des longerons ce qui diminue les bruits dans l'habitacle.

Selon la figure 6, le plancher 10 est un plancher classique de véhicule automobile comprenant un bac de roue de secours.

A la différence des deux modes de réalisation précédemment décrit, ce plancher 10 ne comprend pas d'ouvertures au fond du bac 12 de roue de secours.

Le corps 14 du plancher 10 est recouvert localement par une couche 26 d'élastomère, collée au fond du bac 12 de roue de secours.

La couche 26 d'élastomère a pour effet, d'une part, de limiter la vibration du plancher 10, et d'autre part, d'isoler l'intérieur de l'habitacle de véhicule des bruits extérieurs.

Les inventeurs de la présente invention ont réalisé des tests pour comparer les qualités acoustiques d'un plancher selon l'invention et d'un plancher de l'état de la technique.

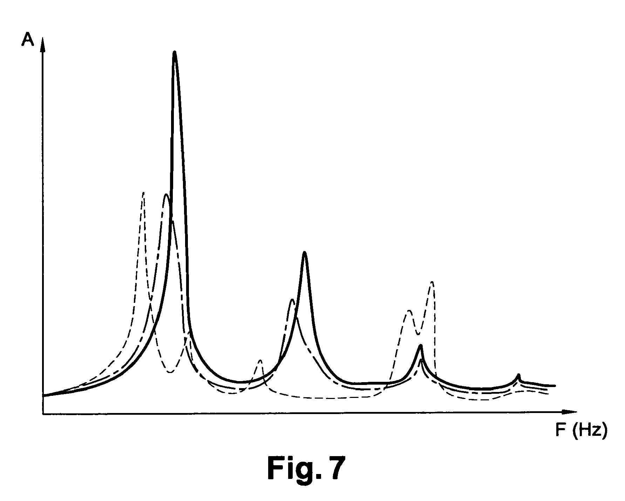

La figure 7 représente sur un même graphique les réponses en fréquence :
- d'un plancher selon l'état de la technique (en trait continu),
- d'un plancher selon le premier mode de réalisation de l'invention (en trait pointillé), et
- d'un plancher selon la figure 6 (en trait mixte).

Ce graphique représente l'amplitude de vibration du centre du bac 12 de roue de secours en fonction d'une fréquence d'excitation du plancher 10.

Les fréquences d'excitation utilisées sont des fréquences basses voisines de 10 Hz.

On constate clairement sur ce graphique que l'invention permet de réduire l'amplitude de vibration du plancher. L'invention permet donc de réduire les bruits de vibration du plancher lors du roulage.

L'invention ne se limite pas aux modes de réalisation qui viennent d'être décrits.

Pour améliorer les qualités acoustiques d'un plancher selon la figure 6, on peut recouvrir localement le corps du plancher par une plaque comprenant une couche d'élastomère et une couche de matière plastique. Le filtrage des bruits de fréquence élevée est alors meilleur.

## Revendications

1. Plancher (10) en matière plastique de véhicule automobile, dans lequel au moins une zone du plancher (10) est réalisée au moins partiellement en élastomère de façon à atténuer les vibrations du plancher (10) une fois fixé sur le véhicule automobile, **caractérisé en ce que** le plancher comprend un corps (14) en matière plastique comprenant un réseau de bandes (18) de matière plastique agencées de manière à former une pluralité d'ouvertures (16) du corps (14), chaque ouverture (16) étant obturée par une pièce d'élastomère (20).

2. Plancher (10) selon la revendication 1, comprenant un bac (12) de roue de secours réalisé au moins partiellement en élastomère, de l'élastomère apparaissant au moins localement en dessous du bac de roue lorsque le plancher est monté sur le véhicule.

3. Plancher (10) selon la revendication 1 ou 2, comprenant au moins deux corps en matière plastique distincts et une pièce en élastomère (22) reliant les deux corps (14, 24).

4. Plancher (10) selon l'une quelconque des revendications précédentes, dans lequel le corps est réalisé en polypropylène chargé de fibres de verre, par exemple du polypropylène comprenant 40% de fibres de verre.

5. Plancher (10) selon l'une quelconque des revendications précédentes, dans lequel l'élastomère comprend des granulats de pneumatiques recyclés.

6. Plancher (10) selon l'une quelconque des revendications précédentes, du type comprenant un bac (12) de roue de secours.

## Claims

1. A motor vehicle floor (10) of plastics material, in which at least one zone of the floor (10) is made at least in part out of elastomer so as to attenuate vibration of the floor (10) once assembled in the motor vehicle, the floor being **characterized in that** it comprises a body (14) of plastics material comprising an array of strips (18) of plastics material arranged to form a plurality of openings (16) in the body (14), each opening (16) being closed by a piece of elastomer (20).

2. A floor (10) according to claim 1, including a spare tire well (12) made at least in part of elastomer, the elastomer appearing at least locally under the wheel well when the floor is mounted on the vehicle.

3. A floor (10) according to claim 1 or claim 2, comprising at least two distinct bodies of plastics material and a piece (22) of elastomer interconnecting the two bodies (14, 24).

4. A floor (10) according to any preceding claim, wherein the body is made of fiberglass-filled polypropylene, e.g. polypropylene containing 40% glass fibers.

5. A floor (10) according to any preceding claim, wherein the elastomer comprises recycled tire aggregate.

6. A floor (10) according to any preceding claim, of the type including a spare tire well (12).

## Patentansprüche

1. Bodenplatte (10) aus Plastik für ein Kraftfahrzeug, in der mindestens eine Zone der Bodenplatte (10) mindestens teilweise aus Elastomer derart hergestellt ist, dass die Schwingungen der Bodenplatte (10), sobald sie auf dem Kraftfahrzeug befestigt ist, gedämpft werden, **dadurch gekennzeichnet, dass** die Bodenplatte einen Körper (14) aus Plastik aufweist, der ein Netz aus Plastikbändern (18) aufweist, die derart angeordnet sind, dass sie mehrere Öffnungen (16) des Körpers (14) bilden, wobei jede Öffnung (16) mit einem Elastomerteil (20) verschlossen ist.

2. Bodenplatte (10) nach Anspruch 1, die eine Ersatzradmulde (12) aufweist, die mindestens teilweise aus Elastomer hergestellt ist, wobei das Elastomer mindestens stellenweise unterhalb der Radmulde erscheint, wenn die Bodenplatte auf das Fahrzeug montiert ist.

3. Bodenplatte (10) nach Anspruch 1 oder 2, die mindestens zwei getrennte Körper aus Kunststoff und einen Elastomerteil (22) aufweist, der die zwei Körper (14, 24) verbindet.

4. Bodenplatte (10) nach einem der vorhergehenden Ansprüche, bei der der Körper aus Polypropylen mit Glasfaserfüllung hergestellt ist, zum Beispiel aus Polypropylen, das 40 % Glasfasern enthält.

5. Bodenplatte (10) nach einem der vorhergehenden Ansprüche, bei der das Elastomer Granulate aus recycelten Reifen enthält.

6. Bodenplatte (10) nach einem der vorhergehenden Ansprüche, des Typs, der eine Ersatzradmulde (12) aufweist.
